# EUROPEAN PATENT APPLICATION

(11) **EP 3 090 662 A1**
(43) Date of publication of application: **09.11.2016**
(21) Application number: 15167018.9
(22) Date of filing: 08.05.2015
(51) Int. Cl.: A47J 19/00

(54) **JUICE EXTRACTOR**

(71) Applicant: Ya Horng Electronic Co., Ltd., Tainan City 74555 (TW)
(72) Inventor: Huang, Jin-Yi, 745 Tainan City (TW)
(74) Representative: Nicholls, Michael John

(57) **Abstract**

In a juice extractor, left and right auger units (6, 7) are rotatably mounted on a base (31), and left and right tooth members (63, 73) are disposed to respectively surround lower ends of the left and right auger units (6, 7). The left tooth member (63) has left teeth (631) which are meshed with right teeth (731) of the right tooth member (73) so as to permit the left and right auger units (6, 7) to rotate synchronously for extracting juice from juicy food.

## Description

This invention relates to a juice extractor, more particularly to a juice extractor for extracting juice from juicy food, such as fruits, vegetables, etc.

Various juice extractors are known in the art. In most conventional juice extractors, juicy food is squeezed in a space defined between a housing and a single auger enclosed in the housing for extracting juice from the juicy food, and the pulp, which may still contain some juice, is immediately discharged after the juicy food is squeezed.

Therefore, an object of the present invention is to provide a novel juice extractor, which can efficiently extract more juice from juicy food.

Accordingly, a juice extractor of the present invention includes a base, a pulp outlet, a juice outlet, a housing body, left and right auger units, left and right tooth members, and a drive unit. The base defines a central line in a transverse direction, and includes a periphery, left and right mounting zones, left and right channels, a passage, and a juice merging zone. The periphery is divided by the central line into left and right half peripheries. The left and right mounting zones are opposite to each other relative to the central line. The left channel is defined between the left mounting zone and the left half periphery. The right channel is defined between the right mounting zone and the right half periphery. The passage is defined between the left and right mounting zones. The juice merging zone is disposed downstream of the left and right channels and the passage. The pulp outlet is communicated with the passage and is disposed opposite to the juice merging zone in the transverse direction. The juice outlet is communicated with the juice merging zone. The housing body has a skirt portion which defines a compression chamber in cooperation with the base. The left auger unit is disposed inside the compression chamber, and is rotatably mounted in the left mounting region of the base about a first axis. The right auger unit is disposed inside the compression chamber, and is rotatably mounted in the right mounting region of the base about a second axis parallel to the first axis. The left tooth member is disposed to surround a lower end of the left auger unit, and includes a plurality of left teeth displaced from each other about the first axis. The right tooth member is disposed to surround a lower end of the right auger unit, and includes a plurality of right teeth which are displaced from each other about the second axis, and which are meshed with the left teeth such that the left and right auger units are rotatable synchronously to thereby permit juice extracted from the juicy food to flow into the juice merging zone while allowing collected pulp to be discharged through the pulp outlet. The drive unit is disposed to drive the left auger unit to rotate about the first axis.

Other features and advantages of the present invention will become apparent in the following detailed description of the embodiment of the invention, with reference to the accompanying drawings, in which:
Fig. 1 is a perspective view of a juice extractor according to an embodiment of the present invention;
Fig. 2 is an exploded perspective view of the juice extractor of Fig. 1;
Fig. 3 is a top view of the juice extractor with a sectioned housing;
Fig. 4 is similar to Fig. 3, but with the housing and auger units omitted;
Fig. 5 is a fragmentary, partly sectional view of the juice extractor;
Fig. 6 is similar to Fig. 5 but with the auger units also sectioned;
Fig. 7 is a fragmentary partly sectional view of the juice extractor illustrating a gate plate in a closed position; and
Fig. 8 is similar to Fig. 7 but illustrating the gate plate in an open position.

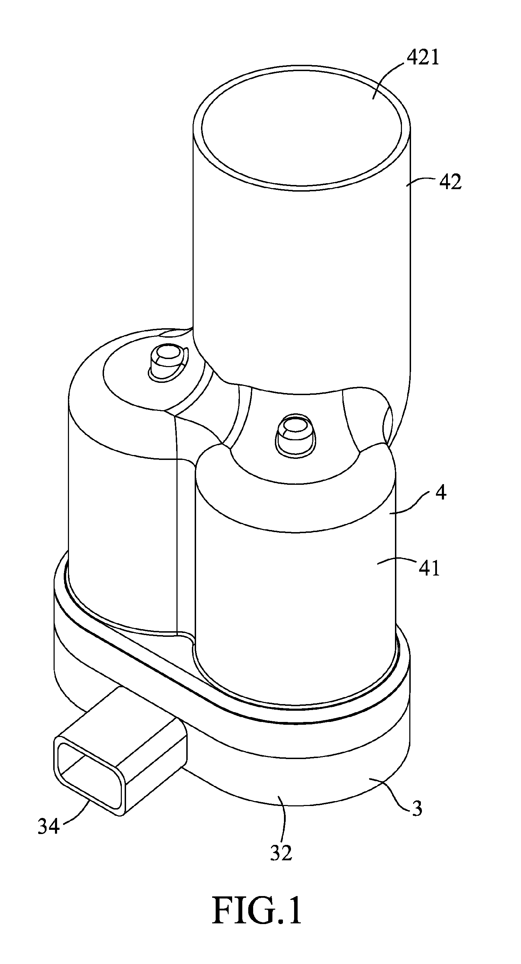

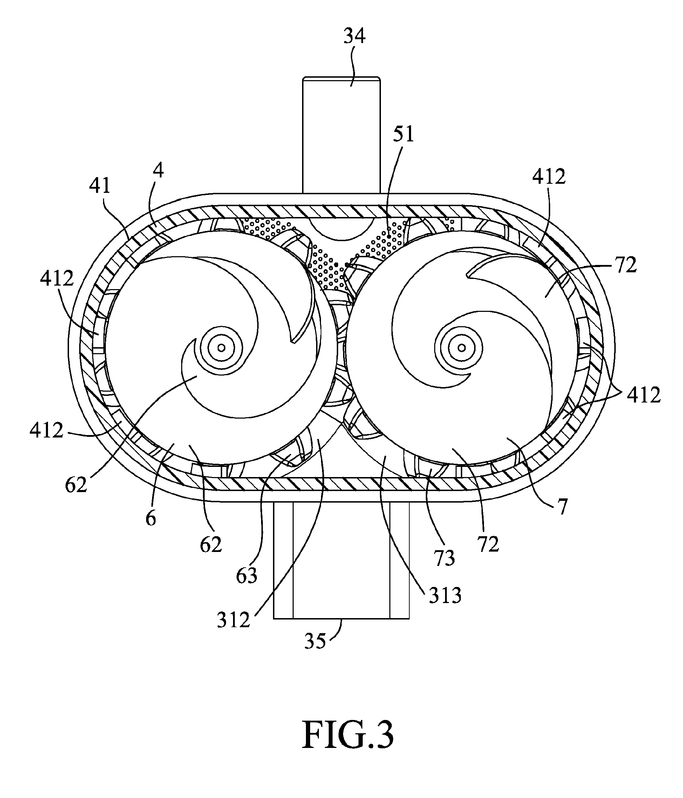

With reference to Figs. 1 to 5, a juice extractor for extracting juice from juicy food according to an embodiment of the present invention is shown to include a main body 3, a housing 4, left and right auger units 6, 7, left and right tooth members 63, 73, and a drive unit 60.

The main body 3 includes a base 31, a surrounding wall 32, a pulp outlet 34, and a juice outlet 35.

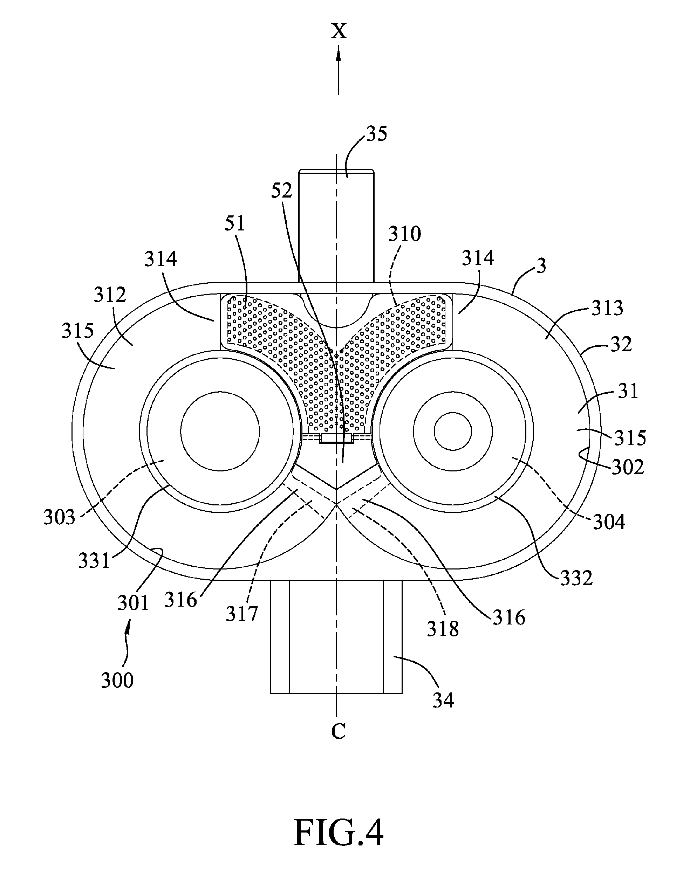

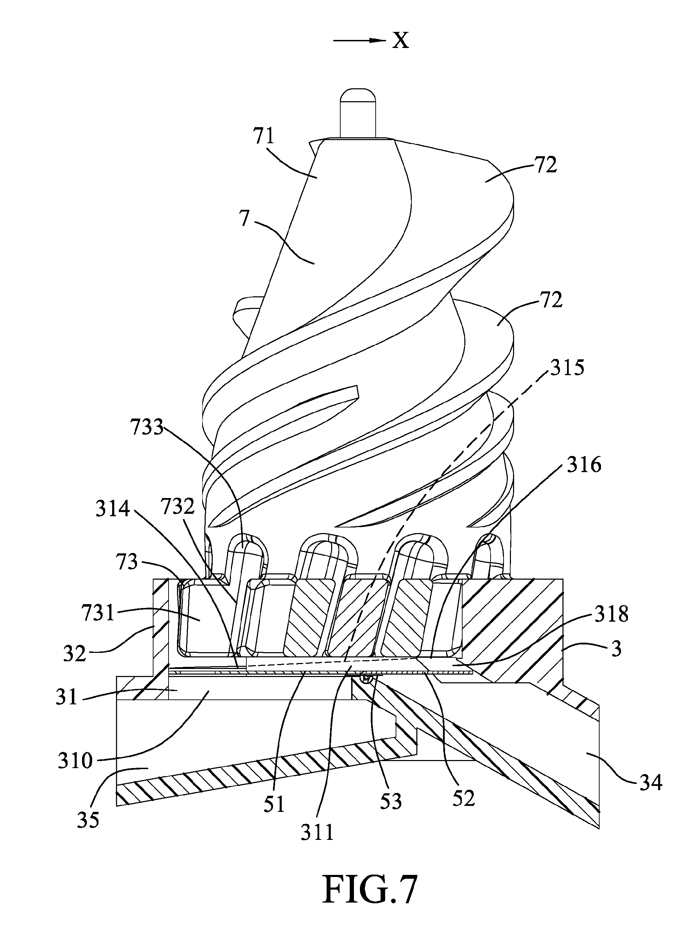

As best shown in Fig. 4, the base 31 defines a central line (C) in a transverse direction (X), and includes a periphery 300, left and right mounting zones 303, 304, left and right channels 312, 313, a passage 311 (see Fig. 7) and a juice merging zone 310. The periphery 300 is divided by the central line (C) into left and right half peripheries 301, 302. The left and right mounting zones 303, 304 are opposite to each other relative to the central line (C) . The left channel 312 is defined between the left mounting zone 303 and the left half periphery 301. The right channel 313 is defined between the right mounting zone 304 and the right half periphery 302. The passage 311 is defined between the left and right mounting zones 303, 304. The juice merging zone 310 is disposed downstream of the left and right channels 312, 313 and the passage 311 and is disposed upstream of the juice outlet 35.

The surrounding wall 32 extends along the periphery 300 to surround the base 31. The pulp outlet 34 is communicated with the passage 311 and is disposed opposite to the juice merging zone 310 in the transverse direction (X) (see Fig. 7). The juice outlet 35 is disposed downstream of the left and right channels 312, 313 and the passage 311 so as to permit juice extracted from the food to be discharged from the juice outlet 35. In this embodiment, the juice outlet 35 is communicated with the juice merging zone 310, and the extracted juice is discharged to the juice outlet 35 through the juice merging zone 310.

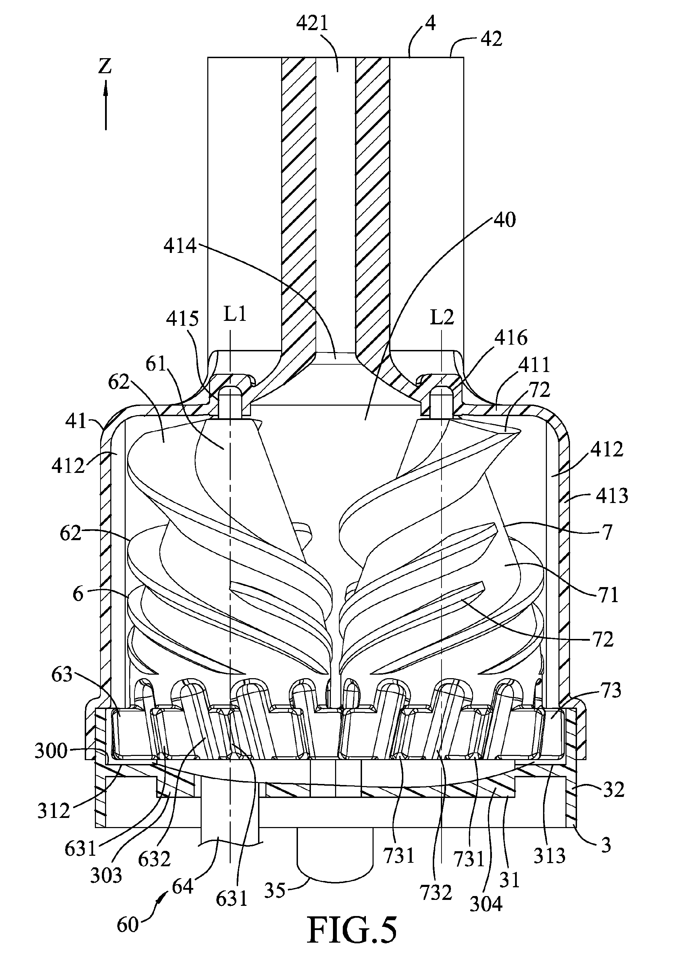

The housing 4 includes a housing body 41 and a hopper 42. The housing body 41 has a top portion 411 and a skirt portion 413 (see Fig. 5). The skirt portion 413 is releasably engaged with the surrounding wall 32 of the main body 3, and defines a compression chamber 40 in cooperation with the base 31. The top portion 411 is spaced apart from the base 31 in an upright direction (Z), and has an access opening 414 for passage of juicy food into the compression chamber 40.

The hopper 42 has an upright duct 421 which is configured for introducing juicy food, and which is in communication with the access opening 414 so as to permit passage of the juicy food into the compression chamber 40.

As shown in Fig. 5, the left auger unit 6 is disposed inside the compression chamber 40, and is rotatably mounted in the left mounting region 303 of the base 31 about a first axis (L1). The right auger unit 7 is disposed inside the compression chamber 40, and is rotatably mounted in the right mounting region 304 of the base 31 about a second axis (L2) parallel to the first axis (L1).

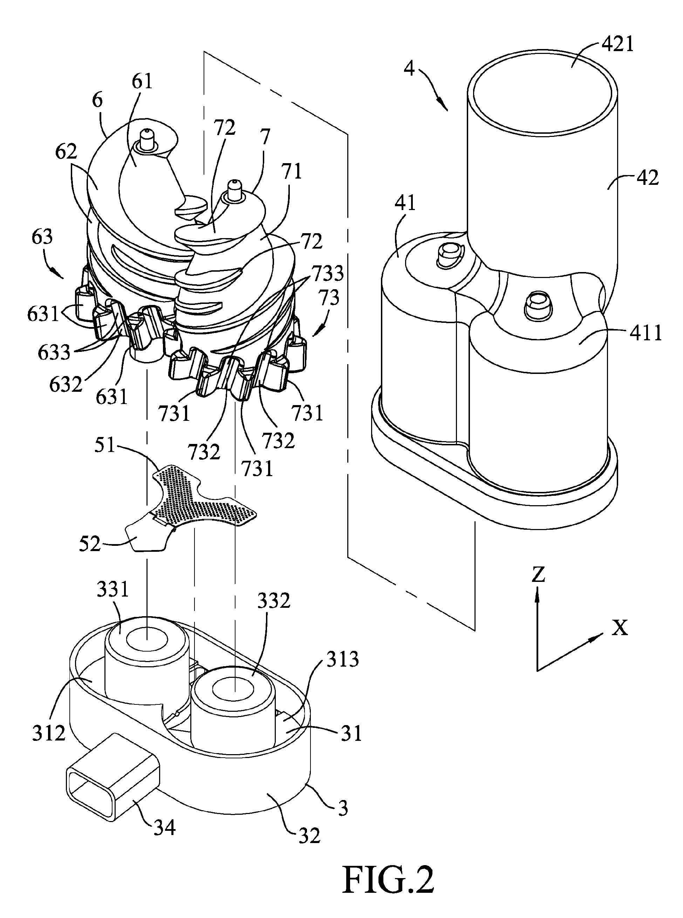

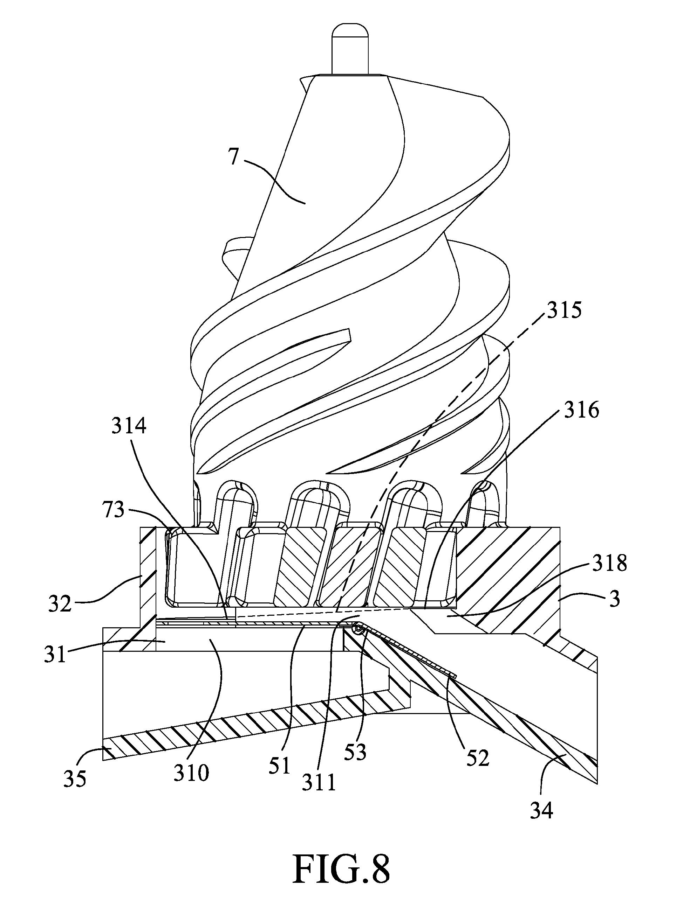

The left tooth member 63 is disposed to surround a lower end of the left auger unit 6, and includes a plurality of left teeth 631 displaced from each other about the first axis (L1) (see Figs. 2 and 5). The right tooth member 73 is disposed to surround a lower end of the right auger unit 7, and includes a plurality of right teeth 731 which are displaced from each other about the second axis (L2), and which are meshed with the left teeth 631 such that the left and right auger units 6, 7 are rotatable synchronously to thereby permit juice extracted from the juicy food to flow into the juice merging zone 310 (see Figs. 7 and 8) while allowing collected pulp to be discharged through the pulp outlet 34. Each of the left teeth 631 and the right teeth 731 extends upwardly and inclinedly.

With reference to Fig. 5, the drive unit 60 is disposed to drive the left auger unit 6 to rotate about the first axis (L1). The drive unit 60 can have any configuration as long as it can be used to drive the left auger unit 6. In Fig. 5, only an output core shaft 64 of the drive unit 60 is shown.

In this embodiment, as shown in Figs. 2, 4, and 7, the juice extractor further includes a filter plate 51, a gate plate 52, and a biasing member 53. The filter plate 51 is disposed over the juice merging zone 310 and is disposed downstream of the left and right channels 312, 313 and the passage 311, so as to permit the extracted juice to flow into the juice merging zone 310 through the filter plate 51.

The gate plate 52 is disposed between the passage 311 and the pulp outlet 34, and is hinged to the filter plate 51 so as to be movable between a closed position (Fig. 7), where the collected pulp is prevented from being discharged to the pulp outlet 34, and an open position (Fig. 8), where the passage 311 is in communication with the pulp outlet 34 to permit the collected pulp to be discharged to the pulp outlet 34.

The biasing member 53 has a biasing force which biases the gate plate 52 to the closed position, and which counteracts the weight of the collected pulp to hold the gate plate 52 in the closed position such that when the weight of the collected pulp is greater than the biasing force, the gate plate 52 is moved to the open position.

As best shown in Fig. 4, each of the left and right channels 312, 313 has an elevated region 316 adjacent to the gate plate 52, a depressed region 314 adjacent to the filter plate 51, and a sloping surface 315 inclined from the elevated region 316 toward the filter plate 51 to the depressed region 314.

In this embodiment, as shown in Figs. 4, 7, and 8, the base 31 further includes left and right inclined regions 317, 318 which extend downwardly and respectively from the elevated regions 316 of the left and right channels 312, 313 toward the pulp outlet 34 so as to facilitate smooth displacement of the gate plate 52.

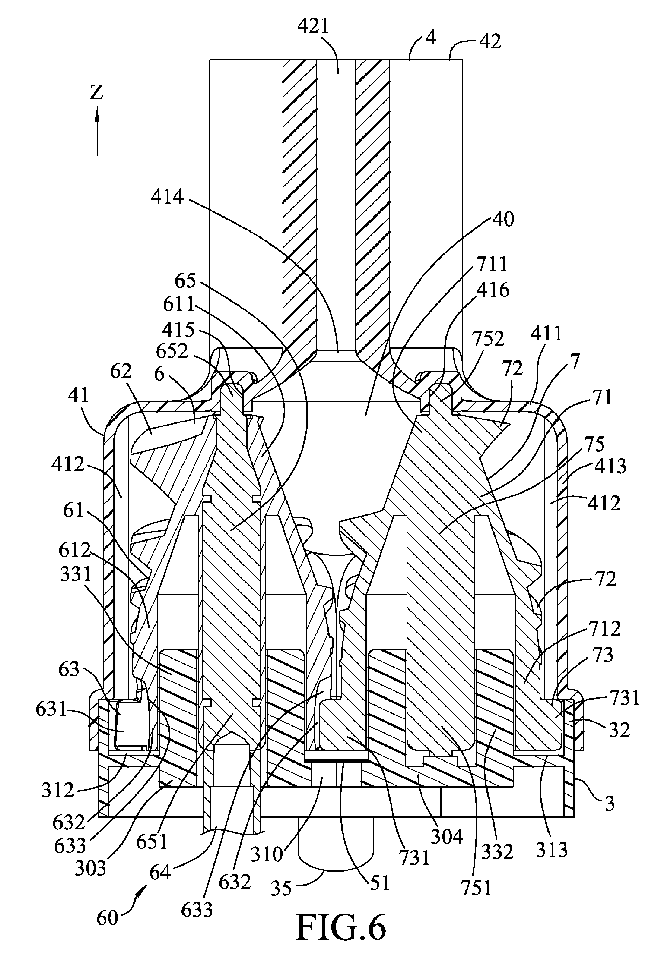

As shown in Fig. 6, the housing body 41 further has left and right grip recesses 415, 416 formed in an inner surface of the top portion 411. The juice extractor further includes left and right tubular bearing members 331, 332 disposed in the left and right mounting zones 303, 304, respectively.

The left auger unit 6 includes a left auger body 61, a plurality of rib portions 62, and a left core shaft 65. The left core shaft 65 has a journal end 651 and an insert end 652 opposite to the journal end 651. The journal end 651 is ournaled in the left tubular bearing member 331, and is coupled to the output core shaft 64 of the drive unit 60 such that the left auger unit 6 is driven by the drive unit 60 to rotate about the first axis (L1) (see also Fig. 5). The insert end 652 is inserted into the left grip recess 415. The left auger body 61 has a neck portion 611 and a flared portion 612 opposite to the neck portion 611 in a direction of the first axis (L1). The neck portion 611 surrounds the left core shaft 65 adjacent to the insert end 652. The flared portion 612 is configured to surround the left tubular bearing member 331. The left tooth member 63 is disposed on the flared portion 612 of the left auger body 61. The rib portions 62 are spaced apart from each other in the upright direction (Z). Each of the rib portions 62 is disposed on the left auger body 61 and extends in a helical direction.

As shown in Fig. 2, the left teeth 631 are displaced from each other by a plurality of left groove portions 632, each of which extends radially into the flared portion 612 of the left auger body 61 and extends upwardly of the left teeth 631 to form a left guiding region 633.

The right auger unit 7 includes a right auger body 71, a plurality of rib portions 72, and a right core shaft 75. The right core shaft 75 has a journal end 751 and an insert end 752 opposite to the journal end 751. The journal end 751 is ournaled in the right tubular bearing member 332. The insert end 752 is inserted into the right grip recess 416. The right auger body 71 has a neck portion 711 and a flared portion 712 opposite to the neck portion 711 in a direction of the second axis (L2). The neck portion 711 surrounds the right core shaft 75 adjacent to the insert end 752. The flared portion 712 is configured to surround the right tubular bearing member 332. The right tooth member 73 is disposed on the flared portion 712 of the right auger body 71. The rib portions 72 are spaced apart from each other in the upright direction (Z). Each of the rib portions 72 is disposed on the right auger body 71 and extends in a helical direction.

As shown in Fig. 2, the right teeth 731 are displaced from each other by a plurality of right groove portions 732, each of which extends radially into the flared portion 712 of the right auger body 71 and extends upwardly of the right teeth 731 to form a right guiding region 733. Each of the left and right guiding regions 633, 733 is configured such that the juicy food crushed by the rib portions 62, 72, can be guided to a space between two adjacent ones of the left teeth or the right teeth 631, 731 for further crushing so as to yield more juice.

In this embodiment, as shown in Figs. 5 and 6, the juice extractor further includes a plurality of rib members 412 each of which extends from an inner surface of the skirt portion 413 of the housing body 41 toward the left and right auger units 6, 7. Each of the rib members 412 further extends in the upright direction (Z). Alternatively, each of the rib members 412 may extend in a helical direction.

Referring back to Figs. 5 and 6, in use, juicy food (not shown) is introduced into the compression chamber 40 through the upright duct 421 of the hopper 42. With the synchronous rotation of the left and right auger units 6, 7, the juicy food is squeezed and crushed in the compression chamber 40 by the rib members 412 and the rib portions 62, 72 of the left and right auger units 6, 7.The crushed juicy food (i.e., the pulp) is further squeezed between the left and right tooth members 63, 73 so that more juice is extracted from the juicy food. The extracted juice can be guided by the left and right channels 312, 313 to flow to the juice merging zone 310 through the filter plate 51 so as to be collected in a juice container (not shown). The pulp is accumulated on the base 31, the filter plate 51, and the gate plate 52. The gate plate 52 is normally in the closed position (see Fig. 7). When the weight of the pulp collected on the gate plate 52 is greater than the biasing force of the biasing member 53, the gate plate 52 is displaced to the open position (Fig. 8) to permit discharge of the collected pulp.

## Claims

1. A vertical juice extractor for extracting juice from food, **characterized by**:
a base (31) which defines a central line (C) in a transverse direction (X), and which includes
a periphery (300) divided by the central line (C) into left and right half peripheries (301, 302),
left and right mounting zones (303, 304) opposite to each other relative to the central line (C),
a left channel (312) defined between said left mounting zone (303) and said left half periphery (301), and
a right channel (313) defined between said right mounting zone (304) and said right half periphery (302);
a housing body (41) having a skirt portion (413) which defines a compression chamber (40) in cooperation with said base (31);
a left auger unit (6) disposed inside said compression chamber (40), and rotatably mounted in said left mounting region (303) of said base (31) about a first axis (L1);
a right auger unit (7) disposed inside said compression chamber (40), and rotatably mounted in said right mounting region (304) of said base (31) about a second axis (L2) parallel to the first axis (L1);
a left tooth member (63) disposed to surround a lower end of said left auger unit (6) and including a plurality of left teeth (631) displaced from each other about the first axis (L1); and
a right tooth member (73) disposed to surround a lower end of said right auger unit (7) and including a plurality of right teeth (731) which are displaced from each other about the second axis (L2), and which are meshed with said left teeth (631) such that said left and right auger units (6, 7) are rotatable synchronously.

2. The juice extractor according to Claim 1, **characterized in that** said base (31) further includes a passage (311) which is defined between said left and right mounting zones (303, 304).

3. The juice extractor according to Claim 2, further **characterized by**:
a pulp outlet (34) which is communicated with said passage (311) to permit collected pulp to be discharge therethrough; and
a juice outlet (35) disposed downstream of left and right channels (312, 313) and said passage (311) so as to permit juice extracted from the food to be discharged from said juice outlet (35).

4. The juice extractor according to Claim 3, **characterized in that** said base (31) further includes a juice merging zone (310) which is disposed downstream of said left and right channels (312, 313) and said passage (311), and which is disposed upstream of said juice outlet (35) so as to permit the extracted juice to be discharged to said juice outlet (35) through said juice merging zone (310).

5. The juice extractor according to Claim 4, further **characterized by** a filter plate (51) disposed over said juice merging zone (310) and disposed downstream of said left and right channels (312, 313) and said passage (311), so as to permit the extracted juice to flow into said juice merging zone (310) through said filter plate (51).

6. The juice extractor according to Claim 5, further **characterized by**:
a gate plate (52) which is disposed between said passage (311) and said pulp outlet (34), and which is hinged to said filter plate (51) so as to be movable between a closed position, where the collected pulp is prevented from being discharged to said pulp outlet (34), and an open position, where said passage (311) is in communication with said pulp outlet (34) to permit the collected pulp to be discharged; and
a biasing member (53) with a biasing force which biases said gate plate (52) to the closed position, and which counteracts the weight of the collected pulp to hold said gate plate (52) in the closed position such that when the weight of the collected pulp is greater than the biasing force, said gate plate (52) is moved to the open position.

7. The juice extractor according to Claim 6, **characterized in that** each of said left and right channels (312, 313) has an elevated region (316) adjacent to said gate plate (52), and a sloping surface (315) inclined from said elevated region (316) toward said filter plate (51).

8. The juice extractor according to Claim 7, **characterized in that** said base (31) further includes left and right inclined regions (317, 318) which extend downwardly and respectively from said elevated regions (316) of said left and right channels (312, 313) toward said pulp outlet (34) so as to facilitate smooth displacement of said gate plate (52).

9. The juice extractor according to Claim 8, further **characterized by** a drive unit (60) disposed to drive said left auger unit (6) to rotate about the first axis (L1).

10. The juice extractor according to Claim 7, further **characterized by** left and right tubular bearing members (331, 332) disposed in said left and right mounting zones (303, 304), respectively, wherein said left and right auger units (6, 7) include left and right core shafts (65, 75), respectively, each of said left and right core shafts (65, 75) having a journal end (651, 751) which is journaled in a corresponding one of said left and right tubular bearing members (331, 332), said journal end (651) of said left core shaft (65) being coupled to an output core shaft (64) of said drive unit (60) such that said left auger unit (6) is driven by said drive unit (60) to rotate about the first axis (L1), said housing body (41) further having
a top portion (411) which is spaced apart from said base (31) in an upright direction (Z), and which has an access opening (414) for passage of the juicy food into said compression chamber (40), and
left and right grip recesses (415, 416) which are formed in an inner surface of said top portion (411), wherein
each of said left and right core shafts (65, 75) further has an insert end (652, 752) which is opposite to said journal end (651, 751), and which is inserted into a corresponding one of said left and right grip recesses (415, 416).

11. The juice extractor according to Claim 10, further **characterized by** a plurality of rib members (412) each of which extends from an inner surface of said skirt portion (413) of said housing body (41) toward said left and right auger units (6, 7).

12. The juice extractor according to Claim 10, **characterized in that** said left and right auger units (6, 7) further include left and right auger bodies (61, 71), respectively, each of said left and right auger bodies (61, 71) having
a neck portion (611, 711) surrounding a corresponding one of said left and right core shafts (65, 75) adjacent to said insert end (652, 752) of a respective one of said left and right core shafts (65, 75), and
a flared portion (612, 712) which is opposite to said neck portion (611, 711) in a direction of a corresponding one of the first and second axes (L1, L2), and which is configured to surround a corresponding one of said left and right tubular bearing members (331, 332),
each of said left and right tooth members (63, 73) being disposed on said flared portion (612, 712) of a corresponding one of said left and right auger bodies (61, 71).

13. The juice extractor according to Claim 12, **characterized in that** each of said left and right auger units (6, 7) further includes a plurality of rib portions (62, 72) which are spaced apart from each other in the upright direction (Z), each of said rib portions (62, 72) being disposed on a corresponding one of said left and right auger bodies (61, 71) and extending in a helical direction.

14. The juice extractor according to Claim 10, further **characterized by** a hopper (42) having an upright duct (421) which is configured for introducing the juicy food, and which is in communication with said access opening (414) so as to permit passage of the juicy food into said compression chamber (40).

15. The juice extractor according to Claim 12, **characterized in that** said left teeth (631) are displaced from each other by a plurality of left groove portions (632), each of which extends radially into said flared portion (612) of said left auger body (61) and extends upwardly of said left teeth (631) to form a left guiding region (633), and said right teeth (731) are displaced from each other by a plurality of right groove portions (732), each of which extends radially into said flared portion (712) of said right auger body (71) and extends upwardly of said right teeth (731) to form a right guiding region (733), said left and right guiding regions (633, 733) being configured to permit juicy food crushed by said left and right auger units (6, 7) to be guided into spaces among said left teeth (631) of said left tooth member (63) and among said right teeth (731) of said right tooth member (73) so as to be further crushed by said left and right tooth members (63, 73).
